# EUROPÄISCHE PATENTSCHRIFT

(11) **EP 2 250 352 B1**
(45) Veröffentlichungstag und Bekanntmachung des Hinweises auf die Patenterteilung: **10.04.2013**
(21) Anmeldenummer: 09715097.3
(22) Anmeldetag: 06.02.2009
(51) Int. Cl.: F01N 3/28

(54) **WABENKÖRPER MIT FLEXIBILITÄTSZONEN**
HONEYCOMB ELEMENT WITH FLEXIBILITY ZONES
CORPS EN NID D'ABEILLES COMPRENANT DES ZONES DE FLEXIBILITÉ

(30) Priorität: 27.02.2008 DE 102008011263
(43) Veröffentlichungstag der Anmeldung: 17.11.2010
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); HIRTH, Peter, 51503 Rösrath (DE); BRÜCK, Rolf, 51429 Bergisch Gladbach (DE); ALTHÖFER, Kait, 51674 Wiehl (DE)
(74) Vertreter: Rössler, Matthias
(86) Internationale Anmeldenummer: PCT/EP2009/051403
(87) Internationale Veröffentlichungsnummer: WO 2009/106417

(56) Entgegenhaltungen:
- EP-A- 0 220 468
- DE-A1-102004 058 285

## Beschreibung

Die vorliegende Erfindung betrifft einen Wabenkörper, wie er beispielsweise zur Abgasnachbehandlung bei Kraftfahrzeugen eingesetzt wird. Ein solcher Wabenkörper weist zumindest ein Gehäuse und eine Wabenstruktur auf. Die Wabenstruktur wiederum hat eine Vielzahl von Kanälen, die jeweils für das Abgas durchströmbar sind. Die Wabenstruktur ist mit zumindest einer wenigstens teilweise strukturierten metallischen Lage gebildet, die die Wabenstruktur fixierende Verbindungspunkte bildet. Solche Wabenkörper, die sich durch eine hohe innere Flexibilität auszeichnen, finden besondere Anwendung als Katalysator-Trägerkörper und/oder Partikelabscheider in Abgassystemen von Diesel- und/oder Otto-Motoren.

Wabenkörper bei der Abgasreinigung von Verbrennungskraftmaschinen haben den Vorteil einer besonders großen Oberfläche, so dass ein sehr inniger Kontakt des ihn durchströmenden Abgases an den Kanalwänden gewährleistet ist. Die Oberfläche, die grundsätzlich von den Kanalwänden gebildet ist, wird regelmäßig mit geeigneten, gegebenenfalls verschiedenen, Katalysatoren beschichtet, um eine Konvertierung von im Abgas enthaltenen Schadstoffen zu ermöglichen. Andere Einsatzzwecke für solche Wabenkörper sind die (zumindest zeitweise) Einlagerung von Feststoffen (Ruß, Partikel etc.) und/oder die Strömungsbehandlung (Mischen, etc.).

Solche Wabenkörper können grundsätzlich aus keramischen oder metallischen Material gefertigt sind. In den letzten Jahren hat sich jedoch der metallische Katalysator-Trägerkörper besonders hervorgetan, da er mit sehr dünnen Materialien, zum Beispiel Blechfolien mit einer Dicke kleiner 80 µm oder sogar kleiner 30 µm, gearbeitet werden kann. Damit einher gehen eine sehr große geometrische Oberfläche und ein signifikant geringerer Druckverlust des Abgassystems beim Durchströmen des Wabenkörpers im Vergleich zum keramischen Träger. Mit der geringen Dicke der Blechfolien ist auch ein deutlich verbessertes Anspringverhalten für die katalytische Beschichtung erkennbar, weil weniger Material vom Abgas aufgeheizt werden muss, um die Anspringtemperatur für den Katalysator (ca. 230 °C) zu erreichen. Als weiterer Vorteil kann angesehen werden, dass hier gleichermaßen eine sehr einfache Anbindung an das übrige Abgassystem (z. B. ein metallisches Abgasrohr) ermöglicht ist, weil jeweils metallische Komponenten miteinander verbunden werden.

Eine solche Wabenstruktur ist jedoch in ihrem Lebenszyklus in einer mobilen Abgasanlage einer Vielzahl unterschiedlicher Belastungen unterworfen. Dabei ist auch zu berücksichtigen, dass gerade die Superposition dieser teilweise extremen Belastungen nachhaltig die Dauerhaltbarkeit solcher Wabenkörper beeinflusst. So können beispielsweise folgende thermische Belastung nachhaltig die Dauerhaltbarkeit beeinflussen: die extremen Temperaturspitzen (bis oberhalb von 1000 °C), die beachtliche Temperaturänderungsgeschwindigkeit beim Aufheizen und Abkühlen und/oder die Temperaturverteilung des anströmenden Abgasstromes. Gleichermaßen gilt dies ist im Hinblick auf die mechanische Belastung, nämlich beispielsweise bezüglich des maximalen Beschleunigungspegels, des Frequenzbereichs der Anregung im Hinblick auf die Eigenfrequenzen sowie auch die gasdynamische Belastung durch Gaspulsation. Es lässt erkennen, dass gerade die Verbindungsbereiche der einzelnen Komponenten (Blechfolien, Gehäuse etc.) eines solchen Wabenkörpers miteinander besonders hohen Belastungen ausgesetzt sind und den sich ständig ändernden thermischen und/oder dynamischen Belastungen nach Möglichkeit sehr lange entsprechen sollen.

Es sind Verbindungstechniken bekannt, bei denen Hart-Lot (als Lotfolie, Lotpulver und/oder Lotpaste) in bestimmten Zonen eines solchen Wabenkörpers positioniert wird, um die metallischen Komponenten miteinander zu verbinden. Zwischen dem Gehäuse und den Blechfolien des Wabenkörpers werden regelmäßig streifenartige, umlaufende Zonen gebildet, wobei sich diese über einen Teil oder die gesamte axiale Länge des Wabenkörpers, bzw. des Gehäuses, erstrecken können. Zur Verbindung der Blechfolien miteinander kann ebenfalls als bekannt angesehen werden, dass diese über den gesamten Querschnitt in einem axialen Teilbereich des Wabenkörpers miteinander verbunden sind. Zusätzlich und/oder alternativ dazu ist auch möglich, (stirnseitig gesehen) Bereiche zu bilden, die eine Vielzahl von Kanälen umfassen, in denen eine Verbindung ausgeführt ist. So lassen sich stirnseitige Muster, beispielsweise nach Art von konzentrischen Ringen, Streifen, Dreiecken und dergleichen erzeugen.

Die DE 10 2004 058 285 A1 beschreibt einen Wabenkörper mit einem Gehäuse und einer Wabenstruktur mit einer Vielzahl an Kanälen und beschäftigt sich mit der Bereitstellung eines Verbindungsmaterials, das eine gezielte Positionierung von Lot zu vorgegebenen Positionen mit hoher Präzision während der Herstellung solcher metallischen Wabenkörper ermöglicht. Dazu wird ein Verbindungsmaterial vorgeschlagen, bei dem ein Lotmaterial diskontinuierlich auf einem kontinuierlichen Trägermaterial ausgebildet ist, ähnlich einem Etikett. Im Übrigen wird eine Vielzahl von Möglichkeiten angesprochen, wo solches Lotmaterial appliziert werden kann, um einen (großen) Wabenkörper zu erhalten, der ein gutes thermisches Dehnungsverhalten und eine gute Dauerhaltbarkeit aufweist.

Auch wenn zum Design eines solchen Lötbildes bereits eine Vielzahl unterschiedlicher Vorschläge gegeben hat, so können diese jedoch im Hinblick auf die Dauerhaltbarkeit nicht allen derzeit herrschenden Bedingungen am Abgassystem eines Kraftfahrzeuges standhalten. Bei der Festlegung eines Designs für ein Lötbild eines solches Wabenkörpers können eine Vielzahl von unterschiedlichen Kriterien betrachtet werden, um ausreichende Flexibilität auf der einen Seite und Dauerhaltbarkeit der Wabenstruktur auf der anderen Seite zu verwirklichen. Darüber hinaus ist bei der Herstellung eines solchen Lötbildes auch zu berücksichtigen, dass die Lötverbindungen reproduzierbar, exakt positionierbar und prozesssicher realisiert werden müssen.

Hiervon ausgehend ist es Aufgabe der vorliegenden Erfindung, die mit Bezug auf den Stand der Technik geschilderten Probleme zumindest teilweise zu lösen. Insbesondere soll ein Wabenkörper angegeben werden, der bei den extremen thermischen und dynamischen Beanspruchungen im Abgassystem eines Automobils eine deutlich verbesserte Lebensdauer hat. Dabei sollen insbesondere die Verbindungspunkte so zueinander angeordnet sein, dass ein vom Aufbau der Wabenstruktur unabhängiges Lötbild angegeben ist. Der Wabenkörper soll sich zusätzlich durch ein deutlich verbessertes Thermoschock-Verhalten und/oder ein verbessertes Schwingungsverhalten auszeichnen.

Diese Aufgaben werden mit einem Wabenkörper gemäß den Merkmalen des Patentanspruchs 1 gelöst. Weitere vorteilhafte Ausgestaltungen des Wabenkörpers sind in den abhängig formulierten Patentansprüchen angegeben. Es ist darauf hinzuweisen, dass die in den abhängig formulierten Patentansprüchen angegebenen Merkmale in beliebiger, technologisch sinnvoller, Weise miteinander kombiniert werden können und weitere Ausgestaltungen der Erfindungen aufzeigen. Auch die Beschreibung, insbesondere im Zusammenhang mit den Figuren, erläutert weitere bevorzugte Ausführungsvarianten der Erfindung.

Der erfindungsgemäße Wabenkörper weist zumindest ein Gehäuse und eine Wabenstruktur mit einer Vielzahl von Kanälen auf, wobei die Wabenstruktur mit zumindest einer wenigstens teilweise strukturierten metallischen Lage gebildet ist, die die Wabenstruktur fixierende Verbindungspunkte bildet und ein Querschnitt der Wabenstruktur radiale Zonen mit unterschiedlicher Dichte der Verbindungspunkte aufweist, wobei in wenigstens einer Zone zudem mindestens 1% und höchstens 20 % der inneren Kontaktpunkte in dem Querschnitt einen Verbindungspunkt bilden.

Im Hinblick auf die Anzahl der Kanäle ist bevorzugt, dass der Wabenkörper mit einer Kanaldichte pro Quadrat-Inch ("cpsi") im Bereich von 100 bis 1000, insbesondere von 200 bis 600, ausgeführt ist. Bevorzugt ist weiter, dass mehrere glatte und strukturierte (zum Beispiel gewellte) Blechfolien zur Herstellung des Wabenkörpers eingesetzt werden. Auch wenn solche Blechfolien beispielweise spiralförmig aufgewickelt werden können, so ist jedoch bevorzugt, dass die Blechfolien einen hiervon abweichenden Verlauf aufweisen, beispielsweise S-förmig, V-förmig, W-förmig, U-förmig oder dergleichen. Die Blechfolien haben dabei einen Dickebereich von bevorzugten 30 µm (Mikrometer) bis 110 µm, insbesondere kleiner 80 µm. Die Anordnung der Blechfolien zueinander erfolgt dann so, dass diese letztendlich gleichmäßig den (runden, ovalen oder ähnlichen) Querschnitt des Wabenkörpers ausfüllen. Die Blechfolien sind nun an diversen Positionen miteinander (kraftschlüssig bzw. stoffschlüssig) verbunden, sogenannte Verbindungspunkte. Hier handelt es sich bevorzugt um eine Lötverbindung, insbesondere um eine Hochtemperatur-Vakuum-Lötverbindung. Damit ist auch klar, dass sich die Verlaufsrichtung bzw. das Lötbild regelmäßig auf den fertig gestellten (gewickelten bzw. gebundenen) Wabenkörper bezieht.

Zu den Verbindungspunkten ist anzumerken, dass diese zur Fixierung der Position aneinander anliegender bzw. benachbart zueinander angeordneter Abschnitte der zumindest einen metallischen Lage dienen. Üblicherweise bilden die Lagen miteinander eine Vielzahl von Kontaktpunkten, also Stellen, an denen Abschnitte der gleichen oder verschiedener metallischer Lagen aneinander anliegen. Gerade unter Berücksichtigung der Anzahl von Kanälen sind regelmäßig ein Kontaktpunkt, üblicherweise zwei Kontaktpunkte pro Kanal gebildet. Bezüglich dieser Kontaktpunkte wird nun vorgeschlagen, dass in wenigstens einer der Zonen (ggf. in der Mehrheit der Zonen oder sogar in allen Zonen) höchstens 20 % davon für einen Verbindungspunkt eingesetzt werden, ganz besonders bevorzugt ist, dass höchstens 10 % oder sogar nur 1 % dieser inneren Kontaktpunkte einen Verbindungspunkt bilden. Äußere Kontaktpunkte, die einen Kontakt zwischen Wabenstruktur bzw. der metallischen Lage einerseits und dem Gehäuse andererseits aufweisen, sind hiervon nicht eingeschlossen. Daraus lässt sich erkennen, dass die Wabenstruktur im Querschnitt in radialer Richtung und/oder in Richtung des Umfangs nicht starr sondern flexibel ausgebildet ist und sich damit den sich ändernden thermischen Belastungen im Abgassystem einer Verbrennungskraftmaschine dauerhaft standhalten kann.

Weiter wird nun vorgeschlagen, dass der Querschnitt in radiale Zonen mit unterschiedlicher Dichte der Verbindungspunkte ausgeführt ist. Hierbei ist insbesondere davon auszugehen, dass in allen Zonen Verbindungspunkte vorliegen. Gleichfalls weisen diese Zonen jedoch auch verbindungsfreie Bereiche auf. Die Grenze einer solchen Zone kann sich zwar an dem Verlauf der wenigstens teilweise strukturierten metallischen Lage orientieren, bevorzugt ist jedoch, dass unabhängig vom Verlauf der metallischen Lage flächige Zonen im Querschnitt bzw. der Stirnseite gebildet sind. Die Zonen, bevorzugt sind zwei, drei oder vier Zonen vorgesehen, können konzentrisch zum Verlauf und des Gehäuses und der Achse des Wabenkörpers angeordnet sein, dies ist aber nicht zwingend erforderlich. Insbesondere können auch konzentrische Zonen gebildet sein, die ein Zentrum haben, das beabstandet zur Achse positioniert ist. Mit der Bereitstellung solcher radialen Zonen soll erreicht werden, dass die Elastizität der Wabenstruktur über den Radius an zum Beispiel das Schwingungsverhalten des Wabenkörpers angepasst wird. Insbesondere werden dabei die Zonen betrachtet, die einerseits an das Gehäuse anschließen und die nah dem Zentrum bzw. der Achse positioniert sind. Bevorzugt ist, dass diese sich hinsichtlich der Dichte der Verbindungspunkte am meisten unterscheiden. Das heißt mit anderen Worten beispielsweise, dass diese beiden Zonen das größte bzw. kleinste Dichteverhältnis zueinander bilden. Mit "Dichte" ist insbesondere die Kenngröße gemeint, die sich aus der Division der Anzahl der Verbindungspunkte und der Fläche der (z. B. kleinsten) Zone bzw. einer aussagekräftigen Referenzfläche ergibt. Grundsätzlich ist dabei euch möglich, dass wenigstens eine (andere) Zone an allen Kontaktpunkten vollständig verbunden ist und/oder wenigstens eine (andere) Zone an keinem Kontaktpunkt verbunden ist. Für den Fall, dass z. B. eine vollständig verbundene Zone vorgesehen ist, ist diese bevorzugt zentral zum Querschnitt der Wabenstruktur anzuordnen.

Gemäß einer Weiterbildung des Wabenkörpers wird vorgeschlagen, dass sich die Dichte der Verbindungspunkte in Richtung eines Radius von innen nach außen kontinuierlich ändert. Das heißt mit anderen Worten, dass, unterteilt man den Querschnitt beispielsweise in eine Mehrzahl von konzentrischen Ringen, die Dichte von einem Ring zum nächsten im Mittel gleichmäßig steigt bzw. sinkt. Für den Fall, dass nur zwei Zonen identifizierbar sind, ist dieses Kriterium, sobald eine unterschiedliche Dichte vorliegt, stets erfüllt, da von der einen Zonen in die zweite Zone eine Steigerung (sprunghaft oder ähnlich) ergibt.

Darüber hinaus wird vorgeschlagen, dass die Wabenstruktur mit mindestens einem Stapel aus einander abwechselnden mehreren strukturierten Blechfolien sowie in glatten metallischen Lagen gebildet ist, wobei die Verbindungspunkte bei einer strukturierten Blechfolie alternierend hin zu benachbarten metallischen Lagen positioniert sind. Damit ist insbesondere gemeint, dass strukturierte Blechfolien sowie glatte Blechfolien (oder glatte Vliese, Sinterwerkstoffe, etc.) abwechselnd aufeinander angeordnet werden und somit einen Stapel bilden, der anschließend so gewickelt und/oder gewunden wird, dass der Querschnitt der Wabenstruktur mit der gewünschten äußeren Form (wie das Gehäuse) hergestellt ist. Betrachtet man nun eine einzelne strukturierte Blechfolie, so hat diese eine Oberseite und eine Unterseite, wobei sie jeweils mit der Oberseite und der Unterseite zu "anderen" metallischen Lagen Kontakt hat. Diese (inneren) Kontaktpunkte können zur Bereitstellung eines Verbindungspunktes herangezogen werden. Hier wird vorgeschlagen, dass in Richtung der strukturierten Blechfolie die Verbindungspunkte alternierend, also einmal hin zur Oberseite und einmal hin zur Unterseite, ausgebildet sind. Dies führt dazu, dass sich die benachbarten Blechfolien bzw. metallischen Lagen aufgrund der wechselweisen Anbindung nach Art einer Ziehharmonika aufziehen können und somit die interne Flexibilität bereitstellen.

Darüber hinaus wird auch vorgeschlagen, dass die Verbindungspunkte entlang einer metallischen Lage mit unterschiedlichem Abstand zueinander gebildet sind. Damit ist insbesondere gemeint, dass der Abstand der Verbindungspunkte innerhalb einer Zone mit dem gleichen Abstand ausgebildet ist. Insoweit ist es möglich, einen Sprung von einer Zone in die andere Zone auch bei einem entsprechenden Wechsel bzw. einer entsprechenden Änderung des Abstandes zu identifizieren. Bevorzugt ist in diesem Zusammenhang, dass die Verbindungspunkte einer metallischen Lage ausgehend von der Mitte in beide Verlaufsrichtungen gleichermaßen verlaufen, also insbesondere (bezüglich ihrer Abstände zueinander) spiegelsymmetrisch zur Mitte angeordnet. Regelmäßig wird sich der Abstand entlang einer metallischen Lage auch nicht konstant ändern, also zunehmen oder abnehmen, vielmehr sind die Abstände bezüglich benachbarter Verbindungspunkte gegebenenfalls stark verschieden. In besonderen Fällen kann es auch sein, dass bezüglich einer metallischen Lage kein gleicher Abstand bezüglich der dort realisierten Verbindungspunkte erkennbar ist. Der tatsächlich anzusetzende Abstand wird zuvor rechnerisch bestimmt, was das erfindungsgemäße Lötbild bei der fertig gestellten Wabenstruktur letztendlich sicherstellt.

Einer Weiterbildung des Wabenkörpers zur Folge sind die Verbindungspunkte Lötstellen, die anschließend zu Extrema der wenigstens teilweise strukturierten metallischen Lage ausgebildet sind. Mit "Lötstellen" sind insbesondere fügetechnische Verbindungen gemeint, bei denen Hartlot eingesetzt wurde. Lötstellen bzw. Lötpunkte werden also insbesondere nach einem Harttemperatur-Vakuum-Lötverfahren hergestellt. Die von der Struktur gebildeten Extrema (z. B. Wellenberge bzw. Wellentäler) bilden letztendlich die inneren Kontaktpunkte, wobei sich die Lötstellen bzw. die Lötpunkte daran anschließen. Ganz besonders bevorzugt ist, dass das Extrema dabei selbst frei von Lotmaterial ist, die Lötstellen bzw. Lötpunkte also beidseits als flankierende Lotstreifen ausgebildet sind. Ein Verbindungspunkt umfasst höchstens eine Lötstelle bzw. Lötpunkt von zwei direkt benachbarten Extrema einer Orientierung (also nur Wellenberge bzw. nur Wellentäler); bevorzugt ist sogar, dass ein Verbindungspunkt nur genau eine Lötstelle bzw. einen Lötpunkt zu einer einzelnen Extrema aufweist.

Des Weiteren wird auch vorgeschlagen, dass die Verbindungsstellen nur in wenigstens einem Teilabschnitt der Erstreckung der Wabenstruktur in Richtung seiner Achse ausgebildet sind. Damit ist insbesondere gemeint, dass die Verbindungsstellen nur über einen Teil der Kanallänge ausgeführt sind. Die Erstreckung der Wabenstruktur wird regelmäßig durch deren Stirnseiten begrenzt, die den Eintritt des Abgases in bzw. den Austritt des Abgases aus der Wabenstruktur ermöglichen. Bevorzugt ist ein Teilabschnitt nah der ersten Stirnseite und ein weiterer Teilabschnitt nah der zweiten Stirnseite vorgesehen, der Rest der Erstreckung weist keinen Querschnitt mit Verbindungspunkten auf. Der Teilabschnitt umfasst beispielsweise 5 bis 15 mm ausgehend von einer Stirnseite. Es hat sich herausgestellt, dass eine solche Wabenstruktur stromeintrittsseitig durch positiven Thermoschock und stromaustrittsseitig durch negativen Thermoschock beansprucht wird. Das bedeutet insbesondere, dass der positive Thermoschock dort radiale Druckspannungen erzeugt, die aufgrund der verteilten Anordnung der Lötstellen beispielsweise gut durch Torsion der Blechfolien kompensiert werden können. Auf der Austrittsseite überwiegen andererseits beispielsweise radiale Zugspannungen, die ebenfalls mit dem hier vorgeschlagenen Lötbild gut kompensieren werden können. Ungeachtet dessen kann der mindestens eine axiale Teilbereich bzw. Querschnitt umfassend die Verbindungsstellen auch an anderen Positionen, z. B. im Bereich der axialen Mitte der Wabenstruktur vorgesehen sein.

Gemäß einer Weiterbildung des Wabenkörpers sind zwei voneinander in Richtung der Achse beabstandete Teilabschnitte vorgesehen, wobei sich die Verbindungspunkte in Richtung der Achse betrachtet überlagern. Damit ist insbesondere gemeint, dass ein Verbindungspunkt in einem ersten Teilabschnitt in Richtung der Achse bzw. entlang eines Kanals gesehen deckungsgleich zu einem anderen Verbindungspunkt im zweiten Teilabschnitt angeordnet ist. Nur der Vollständigkeit halber sei darauf hingewiesen, dass auch eine versetzte Anordnung für spezielle Anwendungen sinnvoll sein kann.

Eine sichere Anbindung der hochflexiblen Wabenstruktur mit dem Gehäuse kann dadurch erreicht werden, dass die Wabenstruktur mittels aller metallischen Lagen und über die gesamte Erstreckung der Wabenstruktur mit dem Gehäuse verbunden ist. Ganz besonders bevorzugt ist, dass alle metallischen Lagen mit ihren jeweils beiden Enden an dem Gehäuse anliegend angeordnet sind und somit über die gesamte Erstreckung dieser Enden mit dem Gehäuse, bevorzugt mit einer Lötverbindung, verbunden sind.

Zum Einsparen von Lotmaterial zur Anbindung der metallischen Lagen an das Gehäuse könnte z. B. auch ein umlaufendes Streifenmuster vorteilhaft sein, bei dem also die Wabenstruktur mittels aller metallischen Lagen, aber nur einen Teil der gesamten Erstreckung der Wabenstruktur mit dem Gehäuse verbunden ist. Insbesondere können umlaufende Streifen im Bereich der Stirnseiten und/oder der axialen Mitte vorteilhaft sein, wobei bevorzugt eine Breite von 5 mm bis 10 mm vorgeschlagen wird.

Schließlich wird auch vorgeschlagen, dass die zumindest eine wenigstens teilweisc strukturierte metallische Lage mit zumindest einer Ausstülpung oder einer Öffnung ausgeführt ist. Ganz bevorzugt ist, dass die metallische Lage mit einer Vielzahl von Ausstülpungen und Öffnungen ausgeführt ist. Bevorzugt ist weiter, dass sich die Ausstülpungen alternierend hin zur Oberseite und zur Unterseite in Verlaufsrichtung der Kanäle erstrecken und stromabwärtsseitig, also insbesondere in ihrem Strömungsschatten, jeweils eine Öffnung bilden.

Besonders bevorzugt findet ein solcher Wabenkörper in einer Abgasbehandlungseinheit Einsatz, insbesondere in der eines Kraftfahrzeuges.

Besonders bevorzugte Ausführungsvarianten der Erfindung sowie das technische Umfeld werden nun anhand der Figuren näher erläutert. Es ist darauf hinzuweisen, dass die in den Figuren gezeigten Ausführungsbeispiele die Erfindung nicht beschränken sollen. Es zeigen schematisch:
- Fig. 1:: Ein Kraftfahrzeug mit einem Abgassystem,
- Fig. 2:: einen Längsschnitt durch eine Ausführungsvariante eines Wabenkörpers,
- Fig. 3:: ein erstes Detail eines Stapels für einen erfindungsgemäßen Wabenkörper,
- Fig. 4:: ein weiteres Detail einer anderen Ausführungsvariante eines Stapels für einen Wabenkörper,
- Fig. 5:: einen Querschnitt einer Ausführungsform eines erfindungsgemäßen Wabenkörpers,
- Fig. 6:: eine weitere Ausführungsvariante eines erfindungsgemäßen Wabenkörpers,
- Fig. 7:: eine weitere Ausführungsvariante eines erfindungsgemäßen Wabenkörpers,
- Fig. 8:: eine weitere Ausführungsvariante eines erfindungsgemäßen Wabenkörpers, und
- Fig. 9:: ein Beispiel für eine strukturierte metallische Lage.

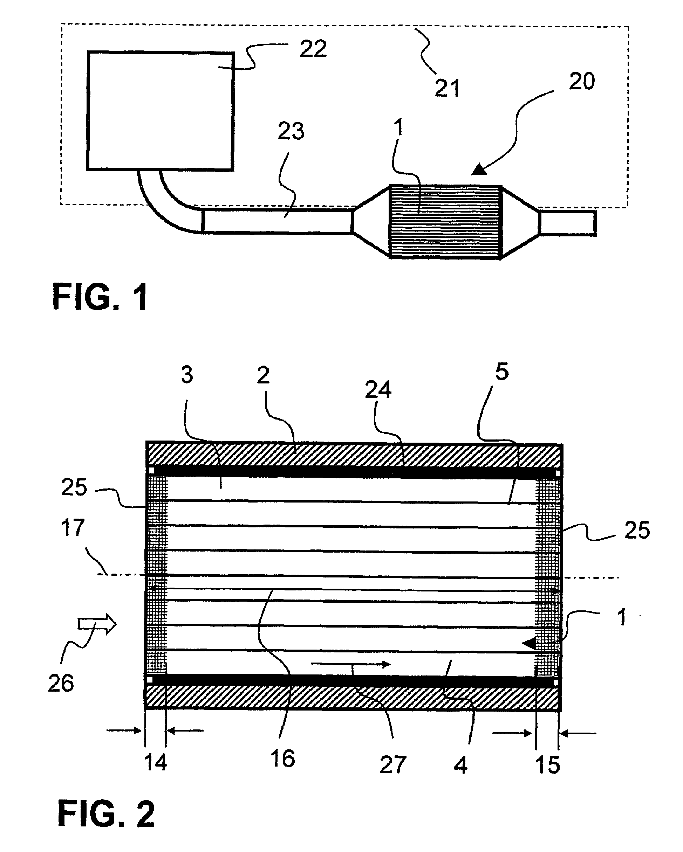

Die Fig. 1 veranschaulicht schematisch den Aufbau eines mobilen Abgassystems für ein Kraftfahrzeug 21. Das Kraftfahrzeug 21 hat eine Verbrennungskraftmaschine 22, beispielsweise einen Otto- oder Diesel-Motor. Der dort verwendete Brennstoff wird als Abgas durch eine entsprechende Abgasleitung 23 hin zu einer Abgasbehandlungseinheit 20 geführt. Dort werden die im Abgas enthaltenen Schadstoffe zumindest teilweise konvertiert und/oder zurückgehalten, so dass schließlich nur noch relativ unschädliche Abgaskomponenten in die Umgebung strömen. Beispiele für solche Abgasbehandlungseinheiten sind katalytische Konverter, Partikelabscheider, Filter, Adsorber und dergleichen. Es ist offensichtlich, dass die Anzahl, Art und/oder Position solcher Abgasbehandlungseinheiten 20 in einem solchen Abgassystem in vielerlei Hinsicht variiert werden kann, folglich wird hier nur exemplarisch eine mögliche Ausgestaltung für einen erfindungsgemäßen Wabenkörper 1, der dort in der Abgasleitung 23 veranschaulicht ist, dargestellt.

Der Aufbau eines Wabenkörpers 1 geht beispielsweise aus Fig. 2 hervor. Fig. 2 ist ein Längsschnitt durch einen (runden) Wabenkörper 1 entlang seiner Achse 17. Der Wabenkörper 1 ist außen begrenzt mit einem Gehäuse 2, das insbesondere als metallisches Rohr ausgeformt ist. Im Inneren des Gehäuses 2 ist die Wabenstruktur 3 mit einer Vielzahl von Kanälen abgebildet. Die (separaten, voneinander zumindest teilweise getrennten) Kanäle 4 erstrecken sich zwischen den beiden Stirnseiten 25 und sind im Wesentlichen parallel zueinander angeordnet. Die Kanäle 4 verlaufen dabei im Wesentlichen auch parallel zur Achse 17. Dies ist aber nicht zwingend erforderlich. Auch müssen die Kanalwände nicht gradlinig verlaufen, es können auch in Richtung der Achse 17 weisende Profilierungen (z. B. Leitflächen) und/oder benachbarte Kanäle 4 verbindende Öffnungen vorgesehen sei.

Die Kanäle 4 der Wabenstruktur 3 sind regelmäßig mit einer katalytisch aktiven Beschichtung versehen, die sich über die gesamte Erstreckung 16 der Wabenstruktur erstrecken kann, gegebenenfalls aber auch nur einen axialen Teilabschnitt betreffen. Insbesondere für den Fall, dass eine hohe Konvertierungsrate mit dem Katalysator erreicht werden soll und/oder eine laminare Strömung des Abgases durch die Wabenstruktur 3 verhindert werden soll, können in bzw. mit den Kanälen 4 Verwirbelungsstellen und/oder Beruhigungszonen vorgesehen sein, die eine innige Kontaktierung des Abgases mit der Kanalwand zur Folge haben. Zwischen der Wabenstruktur 3 und dem Gehäuse 2 ist nun eine Mantelverbindung 24 (bevorzugt als Lotverbindung) ausgeführt. Diese erstreckt sich im Wesentlichen über die gesamte Erstreckung 16 der Wabenstruktur 3. Damit wird insbesondere gewährleistet, dass alle zum Aufbau der Wabenstruktur 3 vorgesehenen Blechfolien bzw. metallischen Lagen sicher mit dem Gehäuse 2 verbunden sind.

Nahe den beiden Stirnseiten 25 ist jeweils schraffiert der axiale Bereich der Wabenstruktur veranschaulicht, in dem der Querschnitt mit Verbindungspunkten ausgeführt ist. Klarzustellen ist, dass (auch wenn hier der gesamte Bereich schraffiert ist) dort die Verbindungspunkte nur jeweils weit entfernt und gegebenenfalls versetzt zueinander angeordnet sind. Die Verbindungspunkte erstrecken sich dabei an einer Stirnseite 25 über einen ersten Teilabschnitt 14 bzw. einen zweiten Teilabschnitt 15 mit einer maximalen Weite von beispielsweise 15 mm, bevorzugt aber höchstens nur 5 mm.

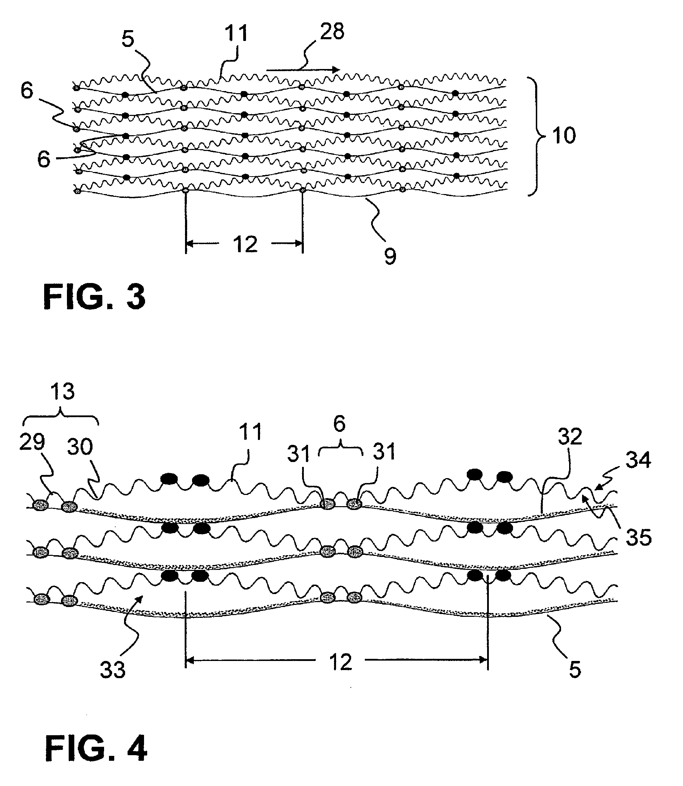

In Fig. 3 ist ein Stapel 10 mit einer Mehrzahl strukturierter Blechfolien 11 und glatter Lagen 5 (z. B. ebenfalls Blechfolien oder metallische Vliese) gezeigt. Der Stapel 10 ist hierbei in einem noch ungewundenen Zustand dargestellt, hat also im Wesentlichen eine gradlinige Verlaufsrichtung 28. Mit unterschiedlichen Farbgebungen sind zudem die Verbindungspunkte 6 der Blechfolien zueinander dargestellt. In Folge der Tatsache, dass die Ausbildung solcher Verbindungspunkte 6 (Lötverbindungen) erst im montierten Zustand, also im gewundenen Zustand, im Inneren des Gehäuses, ausgebildet werden, veranschaulicht Fig. 3 insbesondere die Position für ein Haftmittel (z. B. Kleber), an dem nach dem Wickelvorgang beispielsweise pulverförmiges Lot positioniert wird, welches letztendlich zur Ausbildung der hier exemplarisch und veranschaulichend dargestellten, bezogen auf die strukturierte Blechfolie 11 oberseitigen, Verbindungspunkte (hier dunkel markiert) und unterseitige Verbindungspunkte (hier hell markiert) generiert. Unten in Figur 3 ist gezeigt, dass die gleichartigen, unterseitigen Verbindungspunkte, hier also hin zur unteren glatten Lage 5, den angegebenen Abstand 12 in Verlaufsrichtung 28 von beispielsweise mindestens 20 mm einhalten. Bei dem hier veranschaulichten Lötbild des fertigen Wabenkörpers ist regelmäßig davon auszugehen, dass die zueinander benachbarten Verbindungspunkte keinen konstanten Abstand 12 in Verlaufsrichtung 28 des fertigen Wabenkörpers 1 haben.

Fig. 4 zeigt nun eine Variante, wobei jeder Verbindungspunkt mit zwei Lötpunkten 31 (bzw. Lötstellen) an benachbarten Strukturextrema 13, also entweder einer Erhebung 29 oder einer Senke 30, ausgebildet ist. Zwischen den Verbindungspunkten 6 sind eine Vielzahl von Extrema 13 der Struktur der strukturierten Blechfolie 11 vorgesehen. Nur sei an dieser Stelle darauf hingewiesen, dass üblicherweise die Anzahl der Strukturextrema 13 zwischen gleichartigen (gleichfarbig dargestellten) Verbindungsstellen in Verlaufsrichtung normalerweise deutlich höher ist als das hier exemplarisch dargestellt ist, insbesondere liegen mindestens 15 Strukturextrema dazwischen.

Darüber lässt sich aus Fig. 4 erkennen, dass die glatten Lagen 5 mit einer Beschichtung 32 zur Verhinderung von unerwünschten Verbindungen ausgeführt sind. Auch wenn diese bevorzugt hier an der Oberseite 34 und der Unterseite 35 der glatten Lage 5 (insbesondere Blechfolie) vorgesehen ist, kann in Ausnahmesituationen auch eine einseitige Bereitstellung einer beispielsweise Oxidschicht genügen. Jedenfalls soll so gewährleistet werden, dass eine Anbindung der metallischen Lagen, beispielsweise in Folge einer Diffusion, vermieden wird und sich folglich unter Beanspruchung relativ große Zellen 33 ausbilden können. Mit anderen Worten kann also festgehalten werden, dass eine große Zelle 33 beispielsweise mit einem Abschnitt einer glatten Lage 5 und einem Abschnitt einer strukturierten Blechfolie 11 gebildet ist, wobei die Zelle über zwei gleichartige Verbindungspunkte (hier für unterseitige Verbindungspunkte gezeigt) begrenzt ist und weiter die Zellenbegrenzung mittels der strukturierten Blechfolie 11 mit mindestens 15 Strukturextrema 13 gebildet ist. Damit wird eine besonders starke Verformbarkeit der Zellen 33 bzw. flexible Anordnung der benachbarten Blechfolien realisiert und zwar einerseits in Verlaufsrichtung 28 und andererseits auch quer dazu.

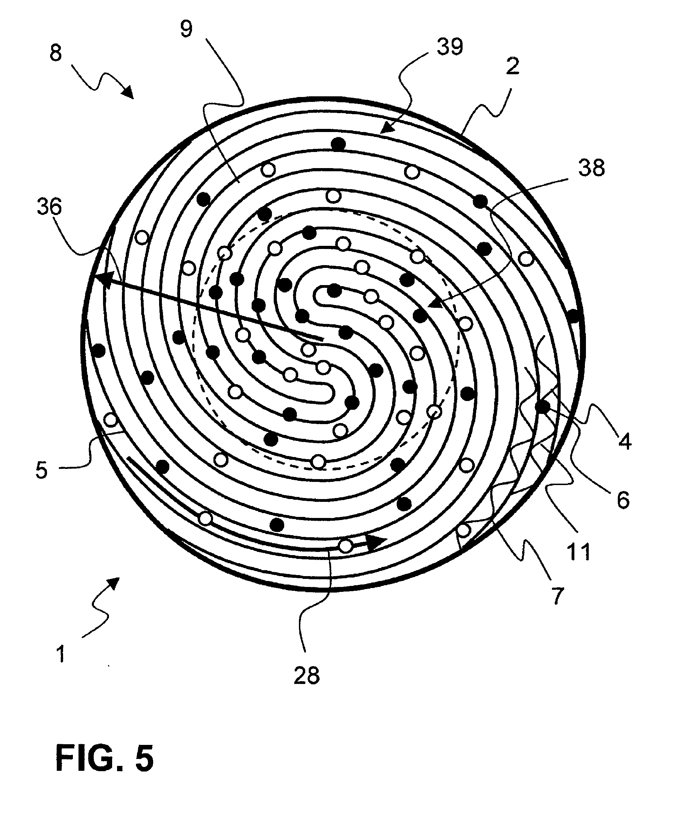

Fig. 5 stellt einen Querschnitt durch einen Wabenkörper 1 dar, beispielsweise durch den ersten Teilabschnitt 14 aus Fig. 2. Hier sind nun erneut die über den Querschnitt verteilt angeordneten Verbindungspunkte 6 veranschaulicht. Dargestellt ist das Gehäuse 2, in dem hier S-förmig gewundene mehrere glatte metallische Lagen 5 sowie strukturierte Blechfolien 11 abwechselnd so angeordnet und gewunden positioniert sind, dass der gesamte Querschnitt 8 innerhalb des Gehäuses 2 ausgefüllt ist. Die aneinander anliegenden glatten Lagen 5 und strukturierten bzw. gewellten Blechfolien 11 bilden die Kanäle 4 aus. Durch die unterschiedliche Farbe der Verbindungspunkte 6 soll veranschaulicht werden, dass die Verbindungspunkte 6 in Verlaufsrichtung 28 der Lage 5 abwechselnd hin zur Oberseite bzw. zur Unterseite ausgeführt sind. Deshalb wechseln sich die farblichen Markierungen (hell, dunkel) der Verbindungspunkte 6 in Verlaufsrichtung 28 ab. Fig. 5 veranschaulicht zudem auch verschiedene Zonen entlang des Radius 36, wobei eine abnehmende Häufigkeit der Anzahl der Verbindungspunkte 6 pro dargestellter Zone erkennbar ist.

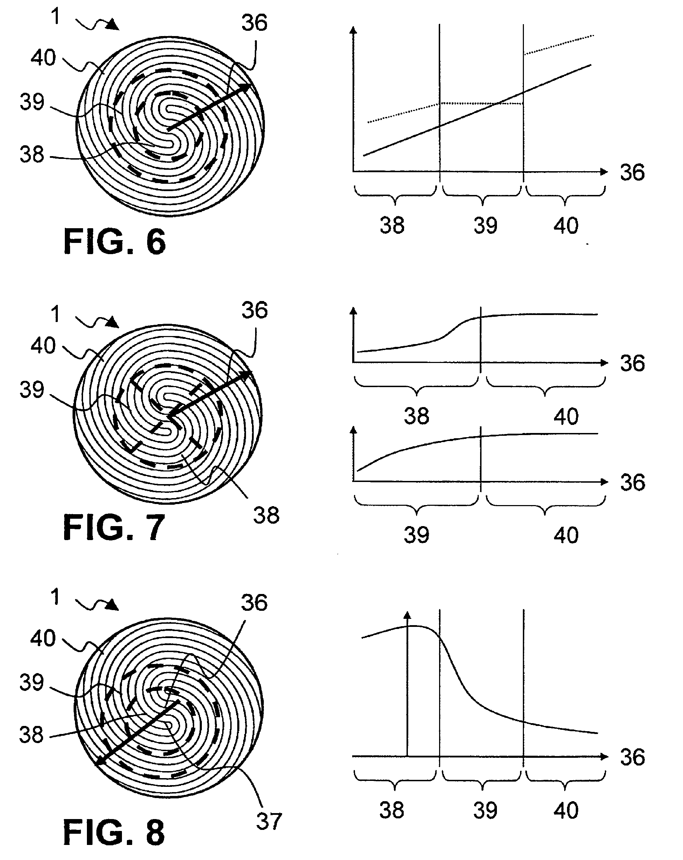

Fig. 6 zeigt nun im linken Teil schematisch einen weiteren Querschnitt eines Wabenkörpers 1, wobei sich dort eine erste Zone 38 um die Achse des Wabenkörpers 1 erkennen lässt. Konzentrisch hierzu sind eine zweite Zone 39 und radial 36 außen eine dritte Zone 40 vorgesehen. Im rechten Teil wird nun veranschaulicht, wie die Häufigkeit der Verbindungspunkte 6 sich über den Radius 36 bzw. die drei Zonen 38, 39, 40 verhält. Im Diagramm sind dabei zwei mögliche Ausführungsbeispiele veranschaulicht. So wird bezüglich der ersten Variante (durchgezogene Linie) eine kontinuierliche Erhöhung der Dichte der Verbindungspunkte 6 verwirklicht. In der zweiten Variante (gepunktete Linie) wird in der ersten Zone 38 die Häufigkeit zunächst leicht gesteigert, in der zweiten Zone 39 auf einem konstanten Wert gehalten und in der dritten Zone 40 von einem gegenüber der zweiten Zone 39 veränderten Wert (hier deutlich größer) erneut gesteigert.

Fig. 7 ist ähnlich aufgebaut wie Fig. 6. Hier weist der Wabenkörper 1 eine äußere, bis ans Gehäuse hinan reichende dritte Zone 40 auf, die die erste Zone 39 und zweite Zone 38 einschließt. Die erste Zone 38 und die zweite Zone 39 sind hierbei jeweils als Viertel-Kreis-Segmente ausgeführt, die zueinander abwechselnd angeordnet sind. Diese bilden zusammen einen kreisförmigen Zentralbereich. Rechts anhand des Diagramms lässt sich erkennen, dass in der äußeren, dritten Zone 40, ein relativ konstanter Dichte-Wert der Verbindungspunkte vorgesehen ist. Die erste Zone 38 und zweite Zone 39 weisen einen variierenden Verlauf der Dichte der Verbindungspunkte auf, so dass hier beispielsweise die unterschiedliche Wicklung bzw. Vorspannung der Lagen berücksichtigt werden kann.

Fig. 8 wiederum zeigt ein Ausführungsbeispiel, bei dem die Zonen 38, 39 und 40 nicht konzentrisch um die Achse 17 sondern um ein dazu versetztes Zentrum 37 angeordnet sind. Nur der guten Ordnung halber sei darauf hingewiesen, dass selbstverständlich die Zonen nicht konzentrisch sondern in einer hiervon abweichenden, überlagernden bzw. angrenzenden Weise zueinander positioniert sein können. Mit Bezug auf das rechts dargestellte Diagramm lässt sich festhalten, dass über den Radius 36 zunächst ein Ansteigen der Häufigkeit, insbesondere bis hin zum Zentrum 37 festzustellen ist und dann ein Abfall der Häufigkeit hier vorliegt, der sich über die zweite Zone 39 und schließlich die dritte Zone 40 erstreckt.

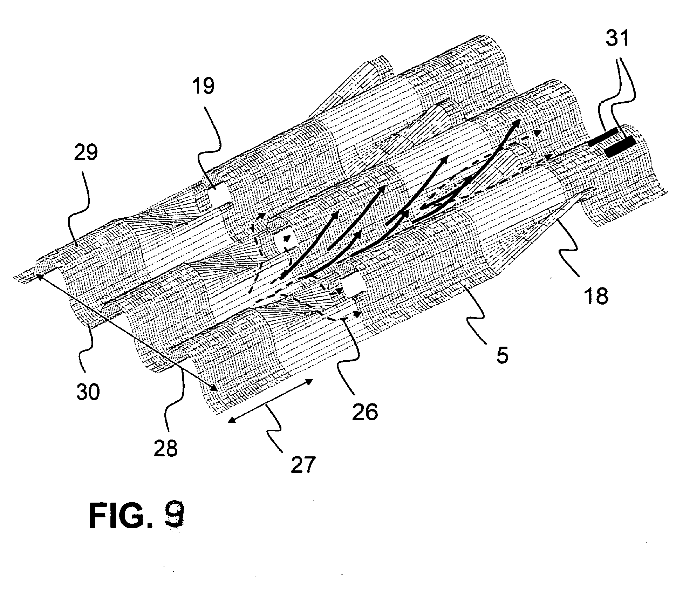

Fig. 9 veranschaulicht eine besonders bevorzugte Ausführungsvariante einer strukturierten Lage 5, bzw. einer strukturierten Blechfolie 11, für die die Erfindung in besonderem Maße Anwendung finden kann. Der komplexe Aufbau der Lage 5 mit einer sich in Verlaufsrichtung 8 regelmäßig wiederholenden Anordnung von Erhebungen 29 und Senken 30 (Wellenform), die damit die Kanalerstreckungsrichtung 27 bestimmen, einerseits und die Integration von abwechselnd nach oben und unten weisenden Ausstülpungen 18 andererseits, erlaubt eine wiederholte Umlenkung bzw. Verwirbelung des die Kanäle entlang strömenden Abgases, so dass sich immer wieder neue Strömungsfäden bilden können (angedeutet durch die Pfeile der ersten Strömungsrichtungen 26). In Folge der Ausstülpungen 18, Öffnungen 19, Erhebungen 29 und Senken 30 der zumindest sehr dünnen Lage 5 sind sehr starre Verbindungen im Inneren des Wabenkörpers zu vermeiden, was nun mit der hier vorgeschlagenen Anordnung von Verbindungspunkten erreicht wird. Beispielsweise ist für eine Erhebung 29 ein Verbindungspunkt 6 veranschaulicht. Dieser besteht aus zwei neben dem Scheitelpunkt der Erhebung 29 platzierten Lötstelle bzw. Lötpunkten 31, die hier streifenförmig und parallel zur Erhebung 29 ausgebildet sind. Ein solcher Verbindungspunkt 6 lässt sich insbesondere dadurch herstellen, dass ein Haftmittel im Bereich der Lötpunkte 31 aufgetragen (z. B. aufgedruckt) wird, die Lagen dann zur Wabenstruktur angeordnet werden, Lotpulver durch die Kanäle über die Stirnseite zu dem Haftmittel zugefügt wird und das daran haftende Lotmaterial letztendlich einen Verbindungspunkt 6 nach einer thermischen Behandlung der Wabenstruktur ausbildet.

### Bezugszeichenliste

- 1: Wabenkörper
- 2: Gehäuse
- 3: Wabenstruktur
- 4: Kanal
- 5: metallischen Lage
- 6: Verbindungspunkt
- 7: Kontaktpunkt
- 8: Querschnitt
- 9: verbindungsfreier Bereich
- 10: Stapel
- 11: Blechfolien
- 12: Abstand
- 13: Strukturextremum
- 14: erster Teilabschnitt
- 15: zweiter Teilabschnitt
- 16: Erstreckung
- 17: Achse
- 18: Ausstülpung
- 19: Öffnungen
- 20: Abgasreinigungseinheit
- 21: Kraftfahrzeug
- 22: Verbrennungskraftmaschine
- 23: Abgasleitung
- 24: Mantelverbindung
- 25: Stirnseite
- 26: Strömungsrichtung
- 27: Kanalerstreckungsrichtung
- 28: Verlaufsrichtung
- 29: Erhebung
- 30: Senke
- 31: Lotpunkt
- 32: Beschichtung
- 33: Zelle
- 34: Oberseite
- 35: Unterseite
- 36: Radius
- 37: Zentrum
- 38: erste Zone
- 39: zweite Zone
- 40: dritte Zone

## Patentansprüche

1. Wabenkörper (1) zumindest aufweisend ein Gehäuse (2) und eine Wabenstruktur (3) mit einer Vielzahl von Kanälen (4), wobei die Wabenstruktur (3) mit zumindest einer wenigstens teilweise strukturierten metallischen Lage (5) gebildet ist, die die Wabenstruktur (3) fixierende Verbindungspunkte (6) bildet und ein Querschnitt (8) der Wabenstruktur (3) radiale Zonen (38, 39, 40) mit unterschiedlicher Dichte der Verbindungspunkte (6) aufweist, wobei in wenigstens einer Zone zudem mindestens 1% und höchstens 20 % von inneren Kontaktpunkten (7) in dem Querschnitt (8) einen Verbindungspunkt (6) bilden.

2. Wabenkörper (1) nach Patentanspruch 1, wobei sich die Dichte der Verbindungspunkte (6) in Richtung eines Radius von innen nach außen kontinuierlich ändert.

3. Wabenkörper (1) nach Patentanspruch 1 oder 2, wobei die Wabenstruktur (3) mit mindestens einem Stapel (10) aus einander abwechselnden mehreren strukturierten Blechfolien (11) sowie glatten metallischen Lagen (5) gebildet ist, wobei die Verbindungspunkte (6) bei einer strukturierten Blechfolie (11) alternierend hin zu benachbarten metallischen Lagen (5) positioniert sind.

4. Wabenkörper (1) nach einem der Patentansprüche 1 bis 3, wobei die Verbindungspunkte (6) entlang einer metallischen Lage (5) mit verschiedenem Abstand (12) zueinander ausgebildet sind.

5. Wabenkörper (1) nach einem der Patentansprüche 1 bis 4, wobei die Verbindungspunkte (6) Lötstellen sind, die anschließend zu Extrema (13) der wenigstens teilweise strukturierten metallischen Lage (5) ausgebildet sind.

6. Wabenkörper (1) nach einem der Patentansprüche 1 bis 5, wobei die Verbindungsstellen (6) nur in wenigstens einem Teilabschnitt (14) der Erstreckung (16) der Wabenstruktur (3) in Richtung seiner Achse (17) ausgebildet sind.

7. Wabenkörper (1) nach Patentanspruch 6, wobei zwei voneinander in Richtung der Achse (17) beabstandete Teilabschnitte (14, 15) vorgesehen sind, wobei die Verbindungspunkte (6) sich in Richtung der Achse (17) betrachtet überlagern.

8. Wabenkörper (1) nach einem der Patentansprüche 1 bis 7, wobei die Wabenstruktur (3) mittels aller metallischen Lagen (5) und über die gesamte Erstreckung (16) der Wabenstruktur (3) mit dem Gehäuse (2) verbunden ist.

9. Wabenkörper (1) nach einem der Patentansprüche 1 bis 8, wobei die zumindest eine wenigstens teilweise strukturierte metallische Lage (5) mit zumindest einer Ausstülpung (18) oder einer Öffnungen (16) ausgeführt ist.

10. Abgasreinigungseinheit (20) aufweisend zumindest einen Wabenkörper (1) nach einem der Patentansprüche 1 bis 9.

11. Kraftfahrzeug (21) aufweisend zumindest eine Abgasreinigungseinheit (20) nach Patentanspruch 10.

## Claims

1. A honeycomb body (1) at least comprising a housing (2) and a honeycomb structure (3) with a multiplicity of ducts (4), wherein the honeycomb structure (3) is formed with at least one at least partially structured metallic layer (5) which forms connecting points (6) for fixing the honeycomb structure (3), and with a cross section (8) of the honeycomb structure (3) having radial zones (38, 39, 40) with different densities of the connecting points (6), wherein furthermore at least 1% and at most 20% of inner contact points (7) in at least one zone in the cross section (8) form a connecting point (6).

2. The honeycomb body (1) as claimed in claim 1, wherein the density of the connecting points (6) varies continuously from the inside to the outside in the direction of a radius.

3. The honeycomb body (1) as claimed in claim 1 or 2, wherein the honeycomb structure (3) is formed with at least one stack (10) composed of a plurality of alternating structured sheet-metal foils (11) and smooth metallic layers (5), with the connecting points (6) on a structured sheet-metal foil (11) being positioned in an alternating fashion to adjacent metallic layers (5).

4. The honeycomb body (1) as claimed in one of claims 1 to 3, wherein the connecting points (6) along a metallic layer (5) is formed with different spacings (12) to one another.

5. The honeycomb body (1) as claimed in one of claims 1 to 4, wherein the connecting points (6) are brazing points which are formed adjacent to extrema (13) of the at least partially structured metallic layer (5).

6. The honeycomb body (1) as claimed in one of claims 1 to 5, wherein the connecting points (6) are formed only in at least one partial section (14) of the extent (16) of the honeycomb structure (3) in the direction of the axis (17) thereof.

7. The honeycomb body (1) as claimed in claim 6, wherein two partial sections (14, 15) are provided which are spaced apart from one another in the direction of the axis (17), wherein the connecting points (6) overlap as viewed in the direction of the axis (17).

8. The honeycomb body (1) as claimed in one of claims 1 to 7, wherein the honeycomb structure (3) is connected to the housing (2) by means of all the metallic layers (5) and over the entire extent (16) of the honeycomb structure (3).

9. The honeycomb body (1) as claimed in one of claims 1 to 8, wherein the at least one at least partially structured metallic layer (5) is formed with at least one protuberant portion (18) or one opening (16).

10. An exhaust-gas purification unit (20) comprising at least one honeycomb body (1) as claimed in one of claims 1 to 9.

11. A motor vehicle (21) comprising at least one exhaust-gas purification unit (20) as claimed in claim 10.

## Revendications

1. Corps en nid d'abeilles (1) présentant au moins un boîtier (2) et une structure en nid d'abeilles (3) avec une pluralité de canaux (4), la structure en nid d'abeilles (3) étant formée avec au moins une couche métallique (5) au moins partiellement structurée, qui forme des points de liaison (6) fixant la structure en nid d'abeilles (3) et une section transversale (8) de la structure en nid d'abeilles (3) présentant des zones radiales (38, 39, 40) avec une densité de points de liaison (6) différente, au moins 1 % et au plus 20 % de points de contact internes (7) dans au moins une zone formant en outre un point de liaison (6) dans la section transversale (8).

2. Corps en nid d'abeilles (1) selon la revendication 1, dans lequel la densité des points de liaison (6) dans la direction d'un rayon varie en continu de l'intérieur vers l'extérieur.

3. Corps en nid d'abeilles (1) selon la revendication 1 ou 2, dans lequel la structure en nid d'abeilles (3) est formée avec au moins une pile (10) constituée d'une alternance de plusieurs feuilles de tôle structurées (11) et de couches métalliques lisses (5), les points de liaison (6) dans une feuille de tôle structurée (11) étant positionnés en alternance par rapport à des couches métalliques adjacentes (5).

4. Corps en nid d'abeilles (1) selon l'une quelconque des revendications 1 à 3, dans lequel les points de liaison (6) sont réalisés le long d'une couche métallique (5) à des distances différentes (12) les uns des autres.

5. Corps en nid d'abeilles (1) selon l'une quelconque des revendications 1 à 4, dans lequel les points de liaison (6) sont des points de brasage qui sont réalisés de manière à se raccorder à des extrêmes (13) de la couche métallique (5) au moins partiellement structurée.

6. Corps en nid d'abeilles (1) selon l'une quelconque des revendications 1 à 5, dans lequel les points de liaison (6) ne sont réalisés que dans au moins une portion partielle (14) de l'étendue (16) de la structure en nid d'abeilles (3) dans la direction de son axe (17).

7. Corps en nid d'abeilles (1) selon la revendication 6, dans lequel deux portions partielles (14, 15) espacées l'une de l'autre dans la direction de l'axe (17) sont prévues, les points de liaison (6) se recouvrant, vu dans la direction de l'axe (17).

8. Corps en nid d'abeilles (1) selon l'une quelconque des revendications 1 à 7, dans lequel la structure en nid d'abeilles (3) est connectée au boîtier (2) au moyen de toutes les couches métalliques (5) et sur toute l'étendue (16) de la structure en nid d'abeilles (3).

9. Corps en nid d'abeilles (1) selon l'une quelconque des revendications 1 à 8, dans lequel l'au moins une couche métallique (5) au moins partiellement structurée est réalisée avec au moins un évasement (18) ou une ouverture (19).

10. Unité de purification de gaz d'échappement (20) présentant au moins un corps en nid d'abeilles (1) selon l'une quelconque des revendications 1 à 9.

11. Véhicule automobile (21) présentant au moins une unité de purification de gaz d'échappement (20) selon la revendication 10.
